# EUROPEAN PATENT APPLICATION

(11) **EP 3 428 720 A1**
(43) Date of publication of application: **16.01.2019**
(21) Application number: 18176460.6
(22) Date of filing: 07.06.2018
(51) Int. Cl.: G03B 35/10, H04N 13/246, H04N 13/271, H04N 13/218

(54) **INTELLIGENT DEVICE AND METHOD FOR OUTPUTTING A DEPTH IMAGE**

(30) Priority: 14.07.2017 CN 201710577093
(71) Applicant: Nextvpu (Shanghai) Co., Ltd., Shanghai 201203 (CN)
(72) Inventor: Feng, Xinpeng, Pudong New District Sanghai 201230 (CN); Zhou, Ji, Pudong New District Shanghai 201230 (CN)
(74) Representative: Laufhütte, Dieter

(57) **Abstract**

An intelligent device comprises at least one reflector, a lens, an image sensor and a processor. The at least one reflector is configured to reflect incident light rays onto the lens, the lens is configured to transmit the light rays reflected by the reflector to the image sensor, the image sensor is configured to perform an imaging processing on the transmitted light rays to obtain an image and send the image to the processor, and the processor is configured to output a depth image according to the obtained image. In the intelligent device according to the invention, only one lens is employed, and the lens may also collect light rays in cooperation with the reflector and finally the depth image is obtained, thereby attaining the same effect as that of a binocular or multi-ocular camera.

## Description

### FIELD OF THE INVENTION

The present invention relates to the field of image technologies, and in particular, to an intelligent device and a method for outputting a depth image.

### BACKGROUND OF THE INVENTION

The world is in a three-dimensional space. The position of every object in the world may be represented by spatial three-dimensional information, and the geometrical attribute of every object may be described by spatial three-dimensional information. As a result, spatial three-dimensional information is very important for a living body and an autonomous device to perceive the world.

At present, there are various methods for acquiring spatial three-dimensional information, for example, laser, time-of-flight, structured light, optical flow and binocular or multi-ocular camera-based stereoscopic vision, etc. The binocular or multi-ocular camera-based stereoscopic vision is widely applied due to its advantages of wide application range, wide perception range, abundant information acquired and well-developed theory, etc. For example, the binocular or multi-ocular camera-based stereoscopic vision has currently been applied to various fields such as Automobile Driver Assistance System, Unmanned Aerial Vehicle, Mars Rover and Lunar Rover, etc.

However, the method of binocular or multi-ocular camera-based stereoscopic vision needs to employ at least two cameras, and thus a device employing a binocular or multi-ocular camera has the defects of large volume and high power consumption, etc.

### SUMMARY OF THE INVENTION

In view of the above problems, the present invention is presented to provide an intelligent device and a method for outputting a depth image so as to overcome the above problems or at least partially solve the above problems, thereby solving the defects of large volume and high power consumption of a device employing a binocular or multi-ocular camera in the prior art.

In a first aspect of the embodiments of the invention, an intelligent device is provided, which comprises at least one reflector, a lens, an image sensor and a processor.

The at least one reflector is configured to reflect incident light rays to the lens.

The lens is configured to transmit the light rays reflected by the at least one reflector to the image sensor.

The image sensor is configured perform an imaging processing on the light rays transmitted to the image sensor to obtain an image and send the image to the processor.

The processor is configured to output a depth image according to the obtained image.

In one embodiment, in the device according to the above embodiments of the invention, the at least one reflector comprises a first set of reflectors and a second set of reflectors.

In some embodiments, in the device according to any of the above embodiments of the invention, the first set of reflectors comprises a first reflector and a second reflector arranged at a preset angle relative to the first reflector.

The second set of reflectors comprises a third reflector and a fourth reflector arranged at a preset angle relative to the third reflector.

In some embodiments, in the device according to any of the above embodiments of the invention, the first reflector is configured to reflect incident light rays to the second reflector.

The second reflector is configured to reflect the received light rays to a first part of the lens.

In some embodiments, in the device according to any of the above embodiments of the invention, a third part of the image sensor images the light rays received by the first part of the lens.

In some embodiments, in the device according to any of the above embodiments of the invention, the first part of the lens is at least one of a left part, a right part, an upper part and a lower part of the lens.

The third part of the image sensor is at least one of a left part, a right part, an upper part and a lower part of the image sensor.

In some embodiments, in the device according to any of the above embodiments of the invention, the third reflector is configured to reflect incident light rays to the fourth reflector.

The fourth reflector is configured to reflect the received light rays to a second part of the lens.

In some embodiments, in the device according to any of the above embodiments of the invention, a fourth part of the image sensor images the light rays on the second part.

In some embodiments, in the device according to any of the above embodiments of the invention, the second part of the lens is at least one of a left part, a right part, an upper part and a lower part of the lens.

The fourth part of the image sensor is at least one of a left part, a right part, an upper part and a lower part of the image sensor.

In some embodiments, in the device according to any of the above embodiments of the invention, the lens is positioned below the reflector, and the image sensor is positioned directly below the lens; or

the lens is positioned above the reflector, and the image sensor is positioned directly above the lens; or

the lens is positioned to the left of the reflector, and the image sensor is positioned to the left of the lens; or

the lens is positioned to the right of the reflector, and the image sensor is positioned to the right of the lens.

In some embodiments, in the device according to any of the above embodiments of the invention, a reflecting surface of a reflector included in the first set of reflectors and the second set of reflectors is at least one of a flat surface, a convex surface and a concave surface.

In some embodiments, in the device according to any of the above embodiments of the invention, the image sent to the processor is a partial image of the image obtained by the image sensor.

In a second aspect of the embodiments of the invention, a method for outputting a depth image is provided, which may be applied to the intelligent device according to the first aspect or any embodiment of the first aspect, comprising:

reflecting, by the reflector, incident light rays to the lens;

transmitting, by the lens, the light rays reflected by the reflector to the image sensor;

performing, by the image sensor, an imaging processing on the light rays transmitted to the image sensor to obtain an image and sending the image to the processor; and

outputting, by the processor, a depth image according to the obtained image.

In one embodiment, in the method according to the above embodiment of the invention, before transmitting, by the lens, the light rays reflected by the reflector to the image sensor, the method further comprises:

configuring the lens to be equivalent to two virtual cameras, and setting internal parameters of each camera of the two virtual cameras as internal parameters of the lens.

In some embodiments, in the method according to any of the above embodiments of the invention, the step of outputting by the processor a depth image according to the obtained image comprises:

rectifying, by the processor, the image, and stereo-matching the rectified image;

processing, by the processor, the stereo-matched image, and outputting the depth image.

In some embodiments, in the method according to any of the above embodiments of the invention, the step of rectifying by the processor the image comprises:

rotating, by the processor, the two virtual cameras to align the two virtual cameras.

In some embodiments, in the method according to any of the above embodiments of the invention, the step of rotating by the processor the two virtual cameras comprises:

determining, by the processor, a first relative positional relation between the first set of reflectors and the second set of reflectors;

determining, by the processor, a second relative positional relation between the two virtual cameras according to the first relative positional relation; and

rotating, by the processor, the two virtual cameras according to the second relative positional relation.

In the embodiments of the invention, an intelligent device is provided, which comprises a reflector, a lens, an image sensor and a processor. The reflector is configured to reflect incident light rays to the lens. The lens is configured to transmit the light rays reflected by the reflector to the image sensor. The image sensor is configured to perform an imaging processing on the light rays transmitted to the image sensor to obtain an image and send the image to the processor. The processor is configured to output a depth image according to the obtained image. In the intelligent device, only one lens is employed, and the lens may also collect light rays in cooperation with the reflector and finally the depth image is obtained, thereby attaining the same effect as that of a binocular or multi-ocular camera. Therefore, the defects of large volume and high power consumption of a device in the prior art that employs a binocular or multi-ocular camera may be solved.

The above illustration is merely a summarization of the technical solutions of the invention. For more clearly understanding the technical measures of the invention and implementing the invention according to the contents of the disclosure, and making the above and other objects, features and advantages of the invention be more apparent and easier for understanding, some specific embodiments of the invention will be presented below.

### BRIEF DESCRIPTION OF THE DRAWINGS

By referring to the detailed description of some preferred embodiments below, various other advantages and benefits will be apparent to one of ordinary skills in the art. The drawings are only provided for showing preferred embodiments of the invention, rather than limiting the scope thereof. Moreover, the same reference sign is used to represent the same element throughout the drawings. In the drawings:
Fig. 1A is a schematic diagram of an intelligent device according to an embodiment of the invention;
Fig. 1B is a schematic diagram of a reflector according to an embodiment of the invention;
Fig. 1C is a schematic diagram showing a partial image selected from the image which is formed by the image sensor according to an embodiment of the invention;
Fig. 2A is a flow chart of a method for outputting a depth image according to an embodiment of the invention;
Fig. 2B is a comparison diagram showing an image before being rectified according to an embodiment of the invention;
Fig. 2C is an enlarged comparison diagram showing an image before being rectified according to an embodiment of the invention; and
Fig. 2D is an enlarged comparison diagram showing an image after being rectified according to an embodiment of the invention.

### DETAILED DESCRIPTION OF THE EMBODIMENTS

Exemplary embodiments of the invention will be described in more detail below by referring to the drawings. Although exemplary embodiments of the invention are shown in the drawings, it should be understood that the invention may be implemented in various forms, rather than being limited to the embodiments illustrated herein. On the contrary, these embodiments are provided for more thoroughly understanding the invention and fully conveying the scope of the invention to one skilled in the art.

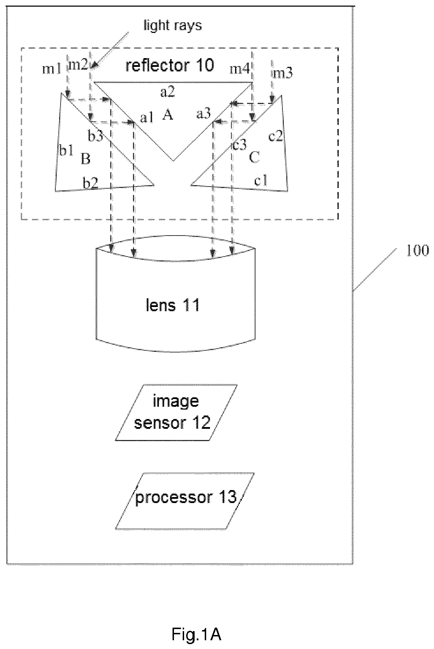

Referring to Fig. 1A, one embodiment of the invention provides an intelligent device 100, which includes at least one reflector 10, a lens 11, an image sensor 12 and a processor 13.

The at least one reflector 10 is configured to reflect the incident light rays onto the lens 11.

The lens 11 is configured to transmit the light rays reflected by the reflector 10 to the image sensor 12.

The image sensor 12 is configured to carry out an imaging processing on the light rays transmitted to the image sensor to obtain an image and send the image to the processor 13.

The processor 13 is configured to output a depth image according to the obtained image.

In one embodiment of the invention, optionally, the at least one reflector 10 includes a first set of reflectors 10 and a second set of reflectors 10. That is, the at least one reflector 10 in the embodiment of the invention may include two sets of reflectors 10. It should be noted that, the number of reflectors 10 is not limited hereto. The above number is merely an example, and in practical application, it may vary according to different practical situations. For example, the at least one reflector 10 may comprise at least two sets of reflectors 10.

In one embodiment of the invention, optionally, the first set of reflectors 10 includes a first reflector 10 and a second reflector 10, and a preset angle is formed between the first reflector 10 and the second reflector 10;

The second set of reflectors 10 includes a third reflector 10 and a fourth reflector 10, and a preset angle is formed between the third reflector 10 and the fourth reflector 10.

Optionally, the first reflector 10 and the second reflector 10 may be set in parallel with each other. For example, the preset angle between the first reflector 10 and the second reflector 10 may be 0° or 180°. In a similar way, optionally, the third reflector 10 and the fourth reflector 10 may be set in parallel with each other, and for example, the preset angle between the third reflector 10 and the fourth reflector 10 may be 0° or 180°.

It should be noted that, the preset angle may be of any size. The above mentioned angle sizes of 0° and 180°are only specific examples. In practical application, it is not limited hereto, and it may also be of other sizes, for example, ranging from 10° to 20°.

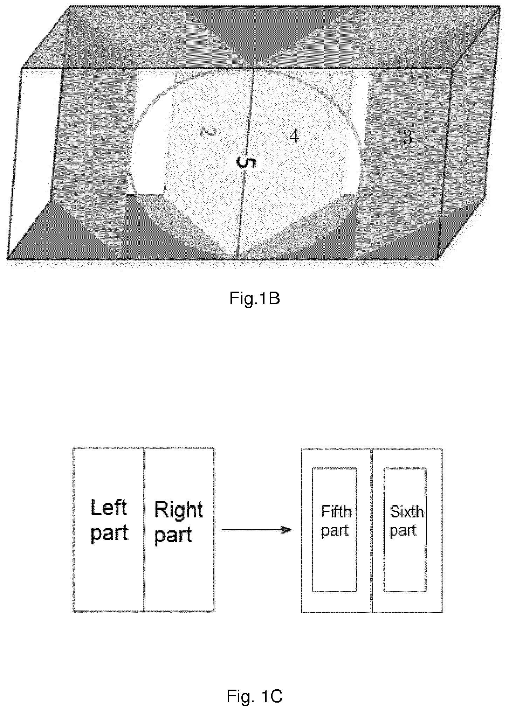

Fig. 1B is a schematic diagram of the reflector 10. The reference sign 1 represents the first reflector 10, the reference sign 2 represents the second reflector 10, and the first reflector 10 and the second reflector 10 are parallel to each other. The reference sign 3 represents the third reflector 10, the reference sign 4 represents the fourth reflector 10, and the third reflector 10 and the fourth reflector 10 are parallel to each other.

Fig. 1B shows an example of the reflector 10. It is not limited hereto in practical application, and detailed description thereof is omitted here.

In one embodiment of the invention, optionally, the first reflector 10 is configured to reflect the incident light rays to the second reflector 10.

The second reflector 10 is configured to reflect the received light rays to a first part of the lens 11.

As shown in Fig. 1A, the reflector 10 on b3 reflects the light ray m1 to the reflector 10 on a1, then the reflector 10 on a1 reflects the light ray to the lens 11. The reflector 10 on b3 reflects light ray m2 to the reflector 10 on a1, then the reflector 10 on a1 reflects the light ray to the lens 11. In a similar way, the reflector 10 on c3 reflects the light ray m3 to the reflector 10 on a3, then the reflector 10 on a3 reflects the light ray to the lens 11. The reflector 10 on c3 reflect the light ray m4 to the reflector 10 on a3, then the reflector 10 on a3 reflects the light ray to the lens 11.

In one embodiment of the invention, optionally, a third part of the image sensor 12 images the light ray received by the first part of the lens 11. The first part of the lens 11 is at least one of a left part, a right part, an upper part and a lower part of the lens 11.

The third part of the image sensor 12 is at least one of a left part, a right part, an upper part and a lower part of the image sensor 12.

In a similar way, optionally, the third reflector 10 is configured to reflect the incident light rays to the fourth reflector 10.

The fourth reflector 10 is configured to reflect the received light rays to the second part of the lens 11.

In one embodiment of the invention, optionally, a fourth part of the image sensor 12 images the light rays on the second part. The second part of the lens 11 is at least one of a left part, a right part, an upper part and a lower part of the lens 11.

The fourth part of the image sensor 12 is at least one of a left part, a right part, an upper part and a lower part of the image sensor 12.

It should be noted that, optionally, the positions of the first part and the second part of the lens 11 are opposite to each other. For example, if the first part of the lens 11 is the left part of the lens 11, then the second part of the lens 11 is the right part of the lens 11. If the first part of the lens 11 is the right part of the lens 11, then the second part of the lens 11 is the left part of the lens 11. If the first part of the lens 11 is the upper part of the lens 11, then the second part of the lens 11 is the lower part of the lens 11. If the first part of the lens 11 is the lower part of the lens 11, then the second part of the lens 11 is the upper part of the lens 11.

In a similar way, optionally, the positions of the third part and the fourth part of the image sensor 12 are opposite to each other. For example, if the third part of the image sensor 12 is the left part of the image sensor 12, then the fourth part of the image sensor 12 is the right part of the image sensor 12. If the third part of the image sensor 12 is the right part of the image sensor 12, then the fourth part of the image sensor 12 is the left part of the image sensor 12. If the third part of the image sensor 12 is the upper part of the image sensor 12, then the fourth part of the image sensor 12 is the lower part of the image sensor 12. If the third part of the image sensor 12 is the lower part of the image sensor 12, then the fourth part of the image sensor 12 is the upper part of the image sensor 12.

However, the above only shows several specific examples of the lens 11 and the image sensor 12, and they are not limited hereto.

In one embodiment of the invention, optionally, the lens 11 is positioned below the reflector 10, and the image sensor 12 is positioned directly below the lens 11.

Or, the lens 11 is positioned above the reflector 10, and the image sensor 12 is positioned directly above the lens 11.

Or, the lens 11 is positioned to the left of the reflector 10, and the image sensor 12 is positioned directly to the left of the lens 11.

Or, the lens 11 is positioned to the right of the reflector 10, and the image sensor 12 is positioned directly to the right of the lens 11.

In one embodiment of the invention, optionally, the reflecting surface of the reflector 10 included in the first set of reflectors 10 and the second set of reflectors 10 is at least one of a flat surface, a convex surface and a concave surface.

In one embodiment of the invention, the image formed by the image sensor 12 may be divided into two parts. One part is an image formed by being reflected to the lens 11 via the reflector 10, and the other part is an image formed by the light rays directly captured by the lens 11, rather than reflected by the reflector 11. The image formed by the light rays directly captured by the lens 11 generally appears at the edge of the image. In order to remove the image noise caused by the distortion at the edge of the reflector 10 and the lens 11, in one embodiment of the invention, optionally, the image sent to the processor 13 is a partial image of the image obtained by the image sensor 12.

The partial image may be determined by the positional relation such as the distance and the angle between the reflector 10 and the lens 11 obtained via calibration.

As shown in Fig. 1C, the left part of the image sensor 12 images the light rays reflected by the first set of reflectors 10, and the right part of the image sensor 12 images the light rays reflected by the second set of reflectors 10. However, when the image sensor 12 sends the image to the processor 13, it does not send the whole image formed on the left part to the processor 13, and it may send a fifth part of the image to the processor 13. In a similar way, when the image sensor 12 sends the image to the processor 13, it does not send the whole image formed on the right part to the processor 13, and it may send a sixth part of the image to the processor 13.

In one embodiment of the invention, optionally, intelligent device 100 is an intelligent sweeper. However, the intelligent sweeper is merely an example, and it is not limited hereto.

An intelligent device 100 has been described above, and a method for outputting a depth image to an intelligent device 100 will be briefly described below.

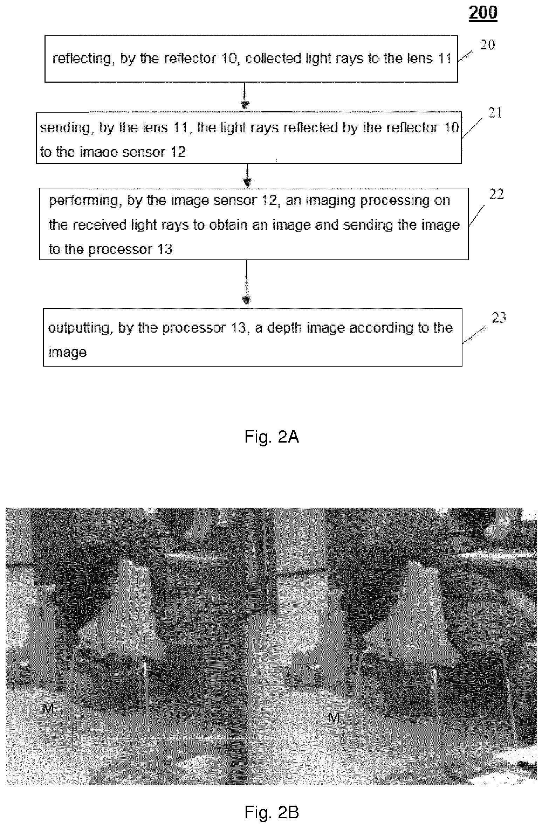

Referring to Fig. 2A, in one embodiment of the invention, a method for outputting a depth image 200 is provided. The method may be applied to the intelligent device 100 described above, comprising:
Step 20: the reflector 10 reflects the incident light rays onto the lens 11;
Step 21: the lens 11 transmits the light rays reflected by the reflector 10 to the image sensor 12;
Step 22: the image sensor 12 performs an imaging processing on the light rays transmitted to the image sensor 12 to obtain an image and sends the image to the processor 13; and
Step 23: the processor 13 outputs a depth image according to the obtained image.

In one embodiment of the invention, further, before the lens 11 transmits the light rays reflected by the reflector 10 to the image sensor 12, a calibration operation may further be carried out.

During the calibration operation, optionally, the operations below may be employed:

the lens 11 is made to be equivalent to two virtual cameras and the internal parameters of each virtual camera are set as the internal parameters of the lens 11. Thus, the same calibration object may have two projections on the intelligent device 100, which is equivalent to that the intelligent device 100 captures two calibration objects which have fixed relative positions in the space, thereby the internal parameters of the two virtual cameras may be calibrated via the images of a set of calibration objects. Moreover, the external parameters of the two virtual cameras may also be calibrated.

Optionally, the internal parameters include at least one of focal length, optical center and distortion factor.

Focal length may refer to the distance from the optical center of the virtual camera to the imaging plane. Optical center may refer to the projection of the optical center of the virtual camera on the imaging plane, and the projection is generally in the vicinity of the image center.

Optionally, distortion factor includes radial distortion and tangential distortion.

It should be noted that, the virtual camera further includes external parameters.

In one embodiment of the invention, the imaging planes of the two virtual cameras may be in different planes, and at this time, in order to improve the accuracy of the output depth image, the image may be rectified. Specifically, the imaging planes of two pictures captured by the virtual camera are placed in the same plane. Therefore, in one embodiment of the invention, the step in which the processor 13 outputs a depth image according to the obtained image includes:
the processor 13 rectifies the image and stereo-matches the rectified image;
the processor 13 processes the stereo-matched image and outputs a depth image.

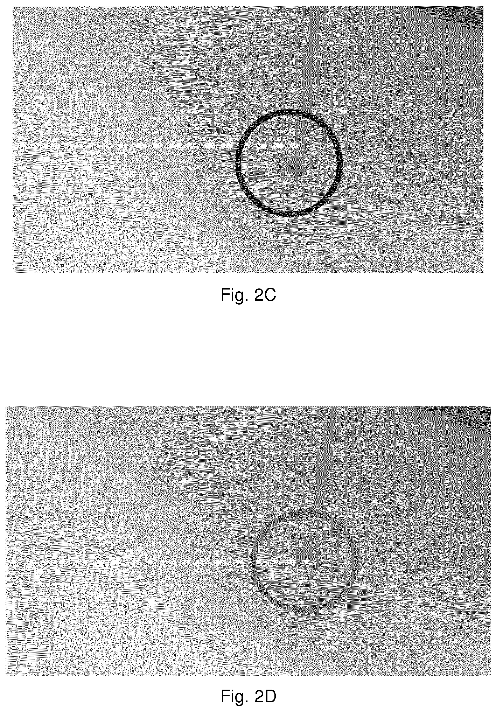

Fig. 2B shows two pictures before rectification. The left-part picture and the right-part picture should completely correspond to each other. However, the chair bottom in region M of the left-part picture and the chair bottom in region M of the right-part picture do not completely correspond to each other, as shown in the enlarged view of the comparison parts in Fig. 2C. After the rectification, the chair bottom in region M of the left-part picture and the chair bottom in region M of the right-part picture completely correspond to each other, as shown in the enlarged view of the contrast parts in Fig. 2D.

In one embodiment of the invention, when the processor 13 rectifies the image, optionally, the following manners may be employed:
the processor 13 rotates the two virtual cameras so as to align the two virtual cameras.

In one embodiment of the invention, when the processor 13 rotates the two virtual cameras, optionally, the following manners may be employed:
the processor 13 determines a first relative positional relation between the first set of reflectors 10 and the second set of reflectors 10;
the processor 13 determines a second relative positional relation between the two virtual cameras according to the first relative positional relation; and
the processor 13 rotates the two virtual cameras according to the second relative positional relation.

In one embodiment of the invention, optionally, the first relative positional relation and the second relative positional relation may be obtained during calibration.

The method and apparatus provided herein are not inherently related to any specific computer, virtual system or other devices. Various general-purpose systems may also be used together with the teachings herein. According to the above description, the structures required to construct such an apparatus are apparent. Moreover, the invention is not applicable for any specific programming language. It should be understood that, various programming languages may be used to implement the disclosure of the invention described herein, and the above description on the specific language is given for disclosing optimal embodiments of the invention.

A large amount of specific details is given herein. However, it may be understood that, the embodiments of the invention may be implemented without these specific details. In some examples, in order not to obscure the understanding of the invention, well-known methods, structures and technologies are not shown in detail.

Similarly, it should be understood that, in order to simplify the disclosure and help to understand one or more of the aspects of the invention, in the above description of the exemplary embodiments of the invention, various characteristics of the invention are sometimes grouped into a single embodiment, drawing or the description thereof. However, the method disclosed should not be construed as indicating the intentions below: the invention to be protected claims more characteristics than those explicitly recited in each claim. More precisely, as reflected in the claims, the inventive aspect may lie in being less than all characteristics of a single embodiment disclosed above. Therefore, the claims conforming to the specific embodiments are hereby explicitly incorporated into the specific embodiments. Each claim itself is taken as an independent embodiment.

It may be understood by those skilled in the art that, the modules in the apparatus of one embodiment may be adaptively modified and provided in one or more apparatuses different from the embodiment. Several modules in the embodiments may be combined into one module or unit or component, and additionally, they may be divided into a plurality of submodules or subunits or subcomponents. Except that at least some of such characteristics and/or processes or modules are mutually exclusive, all the characteristics disclosed in the invention (including the appended claims, abstract and drawings) and all the processes or units of any method or device disclosed herein may be combined in any combination. Unless otherwise stated explicitly, each characteristic disclosed in the invention (including the appended claims, abstract and drawings) may be replaced by alternative characteristics that provide the same, equivalent or similar purpose.

Moreover, it may be understood by one skilled in the art that, although some embodiments described herein include some characteristics included in other embodiments, rather than other features, a combination of characteristics of different embodiments are meant within the scope of the invention and form a different embodiment. For example, any embodiment claimed in the claims may be used in any combination.

Each device embodiment of the invention may be implemented as hardware, or as software modules running on one or more processors, or as a combination thereof. It should be understood by one skilled in the art that, a microprocessor or a digital signal processor (DSP) may be used in practice to implement some or all functions of some or all of the modules in the apparatus according to the embodiments of the invention. The invention may also be implemented as an apparatus program (for example, a computer program and a computer program product) that performs a part or all of the method described herein. Such a program implementing the present invention may be stored on a computer-readable medium, or may have the form of one or more signals. Such signals may be downloaded from the Internet website, or provided on a carrier signal or in any other forms.

It should be noted that the above embodiments are provided for illustrating, rather than limiting, the invention, and alternative embodiments may be designed by one skilled in the art without departing from the scope of the appended claims. In the claims, any reference signs in parentheses should not limit the claims. The word "comprise" does not exclude the presence of elements or steps not listed in the appended claims. The word "a" or "an" preceding an element does not exclude the presence of a plurality of such elements. The invention may be implemented by means of hardware including several distinct elements and by means of a suitably programmed computer. In a singular claim in which several apparatuses are listed, several of such apparatuses may be specifically implemented by the same hardware item. The use of words "first", "second" and "third", etc., does not denote any order, and these words may be interpreted as names.

## Claims

1. An intelligent device, comprising at least one reflector, a lens, an image sensor and a processor, wherein:
the at least one reflector is configured to reflect incident light rays to the lens;
the lens is configured to transmit the light rays reflected by the at least one reflector to the image sensor;
the image sensor is configured to perform an imaging processing on the light rays transmitted to the image sensor to obtain an image and send the image to the processor; and
the processor is configured to output a depth image according to the obtained image.

2. The device of claim 1, wherein the at least one reflector comprises a first set of reflectors and a second set of reflectors,
the first set of reflectors comprises a first reflector and a second reflector arranged at a preset angle relative to the first reflector; and
the second set of reflectors comprises a third reflector and a fourth reflector arranged at a preset angle relative to the third reflector.

3. The device of claim 2, wherein the first reflector is configured to reflect incident light rays to the second reflector;
the second reflector is configured to reflect the received light rays to a first part of the lens.

4. The device of claim 3, wherein a third part of the image sensor images the light rays reflected to the first part of the lens.

5. The device of claim 4, wherein the first part of the lens is at least one of a left part, a right part, an upper part and a lower part of the lens;
the third part of the image sensor is at least one of a left part, a right part, an upper part and a lower part of the image sensor.

6. The device of claim 2, wherein the third reflector is configured to reflect incident light rays to the fourth reflector;
the fourth reflector is configured to reflect the received light rays to a second part of the lens.

7. The device of claim 6, wherein a fourth part of the image sensor images the light rays reflected to the second part of the lens.

8. The device of claim 7, wherein the second part of the lens is at least one of a left part, a right part, an upper part and a lower part of the lens;
the fourth part of the image sensor is at least one of a left part, a right part, an upper part and a lower part of the image sensor.

9. The device of any one of claims 1-8, wherein the lens is positioned below the reflector, and the image sensor is positioned directly below the lens; or
the lens is positioned above the reflector, and the image sensor is positioned directly above the lens; or
the lens is positioned to the left of the reflector, and the image sensor is positioned directly to the left of the lens; or
the lens is positioned to the right of the reflector, and the image sensor is positioned directly to the right of the lens.

10. The device of claim 1, wherein a partial image of the image obtained by the image sensor is sent to the processor.

11. A method for outputting a depth image, applicable for the device according to any one of claims 1-10, comprising:
reflecting, by the at least one reflector of the device, incident light rays to the lens of the device;
transmitting, by the lens, the light rays reflected by the reflector, to the image sensor of the device;
performing, by the image sensor, an imaging processing on the light rays transmitting to the image sensor to obtain an image and sending the image to the processor; and
outputting, by the processor of the device, a depth image according to the obtained image.

12. The method of claim 11, wherein prior to transmitting to the image sensor by the lens the light rays reflected by the reflector further comprises:
configuring the lens to be equivalent to two virtual cameras, and setting internal parameters of each camera of the two virtual cameras as internal parameters of the lens.

13. The method of claim 12, wherein the outputting, by the processor, a depth image according to the obtained image comprises:
rectifying, by the processor, the obtained image, and stereo-matching the rectified image;
processing, by the processor, the stereo-matched image, and outputting the depth image.

14. The method of claim 13, wherein the rectifying, by the processor, the obtained image comprises:
rotating, by the processor, the two virtual cameras to align the two virtual cameras.

15. The method of claim 14, wherein the rotating, by the processor, the two virtual cameras comprises:
determining, by the processor, a first relative positional relation between the first set of reflectors and the second set of reflectors;
determining, by the processor, a second relative positional relation between the two virtual cameras according to the first relative positional relation; and
rotating, by the processor, the two virtual cameras according to the second relative positional relation.
